# EUROPEAN PATENT APPLICATION

(11) **EP 4 174 754 A1**
(43) Date of publication of application: **03.05.2023**
(21) Application number: 21832509.0
(22) Date of filing: 28.06.2021
(51) Int. Cl.: G06Q 50/12

(54) **SYSTEM AND METHOD FOR PHOTORECORDING ORDERS AT CATERING FACILITIES**

(30) Priority: 29.06.2020 RU 2020121554
(71) Applicant: Khvistani, Georgii, 4272150 Netanya (IL)
(72) Inventor: Khvistani, Georgii, 4272150 Netanya (IL)
(74) Representative: Boskovic, Davor
(86) International application number: PCT/RU2021/050185
(87) International publication number: WO 2022/005335

(57) **Abstract**

The proposed technical solution relates to devices, systems and methods for monitoring restaurant operations. In particular, this technical solution relates to devices, systems and methods for monitoring standard work procedures, customer service and other restaurant operations. The proposed method for photorecording orders at catering facilities comprises steps in which an order is received, the order is entered in a data base, the dishes included in the order are prepared; when ready, the dishes in the order are placed in a photorecording means and an image is obtained; the image obtained is entered in the data base for the order; the dishes are removed from the photorecording means and given to the customer; a register receipt is printed which includes images of the dishes in the order using a means for printing a register receipt on the basis of the order data entered in the data base. A system for photorecording orders at a catering facility includes an electronic information processing means: a terminal for receiving and processing orders, a data base for storing information about orders, dishes and images thereof, a photorecording means equipped with a photo/video camera for obtaining images of dishes in an order, and a means for printing a register receipt which is capable of printing images of the dishes in an order on a register receipt.

## Description

The proposed technical solution relates to devices, systems and methods for monitoring restaurant operations. In particular, this technical solution relates to devices, systems and methods for monitoring standard work procedures, customer service and other restaurant operations.

A method for monitoring dishes in restaurants is known in the art (see: WO 2018081782, publ 03.05.2018, IPC G06Q 10/06, G06Q 10/08) that provides for inputting order data into an ordering kiosk, capturing an order image by means of a camera, transmitting images and other information concerning an order to a data base.

A disadvantage of this method for monitoring dishes is insufficient reliability of quality control of services provided, resulting in that the method and the system for carrying it out do not enable to solve a controversial situation, which may arise between a customer and a catering facilities, efficiently and soundly.

This known method may be selected as the closest prior art to the technical solution described herein.

The technical problem to be solved by the present invention is to create a highly reliable system and a method for monitoring restaurant operations.

The technical effect achieved by solving the above technical problem consists in improving safety and reliability of the processes of preparing and serving ordered dishes. Further, the claimed method and system for photorecording orders in catering facilities expand the range of devices intended for monitoring standard work procedures, customer service and other operations of catering facilities.

The above technical problem is solved and the above technical effect is achieved due to that the method for photorecording orders in a catering facilities includes steps wherein: an order is received, the order is entered in a data base, dishes included into the order are prepared, the ordered dishes are placed in a photorecording means as they are ready, and their images are obtained, an image of each dish is entered in the data base with reference to the order, the dish is removed from the photorecording means and is served to a customer, a register receipt, which includes the images of the dishes, is printed with the use of a means for printing a register receipt on the basis of the order information entered in the data base.

The photorecording of the dishes in an order immediately after they are cooked and the subsequent printing of the images in a register receipt make both the customer and the catering facilities sure of high quality of a cooked dish and its freshness, and of compliance between the dishes proposed (e.g. in a menu) and the dishes served, thus, consequently, ensuring safety of the order prepared for the customer. The customer's awareness in respect of the ordered dishes increases, the possibility of a negative effect after visiting a catering facility due to improper behavior or carelessness of its personnel is reduced. If a controversial situation arises, each party has a documentary evidence (a register receipt including the images and parameters of the dishes served) that will enable to settle the controversy efficiently and soundly.

The above technical problem is solved and the above technical effect is achieved also by the following particular embodiments of the method for photorecording orders in a catering facilities.

At the stage of photorecording an image of a dish in an order, one or more parameters of a dish are additionally measured, such parameters comprising: a dish weight; a time when the dish is put into the photorecording means; a time period for which the dish is held in the photorecording means; a dish temperature; a temperature map of the dish surface; and, in the step of recording of an image into the data base, the measured parameters of the dish are entered into the data base with reference to its image.

In addition to an image of a dish, a printed register receipt may include one or more parameters of a dish, such parameters comprising: a dish weight; a time when the dish is put into the photorecording means; a time period for which the dish is held in the photorecording means; a dish temperature; a temperature map of the dish surface.

Said additional measuring of parameters and their subsequent printing on a register receipt increase awareness and improve quality of servicing and safety of a customer. The possibility of comparing a weight and temperature of a served dish with the reference values for that dish (e.g., as indicated into the menu) is provided. The indication of a time when the dish is put into the photorecording means and the indication of a time period for which the dish is in the photorecording means inform the customer that it is the freshly cooked dish that is served to him, which improves the customer's safety and reduces the possibility of a negative effect after visiting a catering facility due to improper behavior or carelessness of its personnel.

Furthermore, the above technical problem is solved and the above technical effect is achieved owing to that the system for photorecording orders in catering facilities comprises: an electronic data processing device connected to a terminal for receiving and processing of orders, a data base for storing information about orders, dishes and their images, a photorecording means equipped with a photo/video camera used for photorecording ordered dishes, a means for printing register receipts, which is configured for printing images of ordered dishes on a register receipt, and interface connections between the system components.

The proposed structure of the system for photorecording orders ensures high quality of servicing and safety of a customer in a catering facility. The availability of the photorecording means, the means for printing register receipts and the data base, which are connected by means of interfaces to the electronic data processing device, provides both a customer and the catering facility with document-based information on an order and cooked/served dishes. Awareness of quality of a cooked dish, its freshness, compliance between dishes proposed (e.g. in a menu) and dishes served, and, consequently, safety of a prepared order is ensured for a customer. The customer's awareness in respect of the dishes included into an order increases, the possibility of a negative effect after visiting a catering facility due to improper behavior or carelessness of its personnel is reduced. If a controversial situation arises, each party has a documentary evidence (a register receipt including the images and parameters of the dishes served) that will enable to settle such a controversy efficiently and soundly.

Also, the above technical problem is solved and the above technical effect is achieved by the following particular embodiments of the system for photorecording orders in catering facilities.

The system for photorecording orders in catering facilities, wherein the photorecording means may be additionally configured for measuring one or more parameters of a dish, such parameters comprising: a dish weight; a time when the dish is put into the photorecording means; a time period for which the dish is held in the photorecording means; a dish temperature; a temperature map of the dish surface.

The system for photorecording orders in a catering facilities, wherein the means for printing register receipts may be also configured for printing one or more parameters of a dish on a register receipt, such parameters comprising: a dish weight; a time when the dish is put into the photorecording means; a time period for which the dish is held in the photorecording means; a dish temperature; a temperature map of the dish surface.

Said additional measuring and subsequent printing on a register receipt improve awareness, quality of servicing and safety of a customer. The possibility of comparing a weight and temperature of a served dish with the reference values for that dish (e.g., as indicated into the menu) is provided. The indication of a time when the dish is put into the photorecording means and the indication of a time period for which the dish is held in the photorecording means inform the customer that it is the freshly cooked dish that is served to him, which improves the customer's safety and reduces the possibility of a negative effect after visiting a catering facility due to improper behavior or carelessness of its personnel.

The system for photorecording orders in catering facilities comprises the electronic data processing device to which the terminal, which is intended for inputting data on received orders placed by customers, is connected. The data base comprising all information concerning orders and dishes included therein, images and parameters of the dishes (a weight, a time when it is cooked, a temperature, a temperature map of the dish) is connected to the electronic data processing device. Furthermore, the data base also contains preset reference images and parameters of dishes that are listed in the menu. After receiving an order and entering it into the data base by means of the terminal, personnel of a catering facilities starts cooking the dishes included into the order. Upon their readiness, the dishes are put into the photorecording means equipped with a photo/video camera for photorecording the dishes ordered. In addition, the photorecording means measures one or more parameters of a dish, for example, a weight of the dish; a time when the dish is put into the photorecording means; a time period for which the dish is held in the photorecording means; a temperature of the dish; a temperature map of the dish surface. All collected images and parameters of the dish are communicated, with the use of the interfaces between the system components, from the photorecording means to the electronic data processing device and are entered in the data base with reference to the particular dishes ordered. The measured parameters and pictures may be compared to the preset reference parameters and images. Upon completion of the process of photorecording and measuring other parameters of the dish, personnel of the enterprise removes the dish from the photorecording means and serves it to the customer. After fulfillment of the order, the means for printing a register receipt prints a register receipt that includes, apart from standard obligatory information, the images of the dishes served according to the order and any other parameters of the dishes measured earlier. Any wired and wireless connections known to a person skilled in the art may be used as the interfaces between the system components, such as Wi-Fi, USB, Ethernet, RS-232, etc.

The system components may receive power both from a common power source, e.g. from the power source of the electronic data processing device, and from individual power sources.

The method for photorecording orders in a catering facility can be implemented as follows. Personnel of an enterprise receives an order from a customer and enters it into a data base by means of an order receiving terminal. Then, the task of cooking the dishes included into the order is received at the kitchen of the facility. Upon their readiness, personnel puts the ready dishes into a photorecording means, collects their images and one or more parameters, such as a dish weight; a time when the dish is put into the photorecording means; a time period for which the dish is held in the photorecording means; a dish temperature; a temperature map of the dish surface. The collected images and parameters of the dishes are transmitted to the electronic data processing device by means of the interfaces between the system components and are stored in the data base with reference to the order. Upon completion of the process of photorecording and measuring parameters of the dish, it is removed from the photorecording means and is served to the customer. When the order is fulfilled, a register receipt is printed by means for printing register receipts, which includes, in addition to the obligatory information, the images of the dishes ordered and their parameters received from the data base.

The claimed method and system for photorecording orders in catering facilities ensure an improvement in safety and reliability of the process of cooking and serving the dishes ordered, since the possibility of incompliance between a dish served and the reference dishes listed in the menu is excluded. A customer may, on the basis of the register receipt received, easily check whether the dishes served to him and their parameters (in particular, a weight, temperature, freshness, appearance, a time of cooking) comply with those ordered by him. If a dish in the register receipt does not comply with the dish in the menu, the customer may soundly settle the controversy with the enterprise. Furthermore, the proposed technical solutions provide the possibility of monitoring quality of served dishes by a manager of the enterprise, which improves safety of dishes served to the customers. This helps to ensure both elimination of an improper attitude by the personnel to the process of cooking dishes, and a fraud and groundless accusations by the customers. The possibility of revealing facts of substitution of more expensive dishes for less expensive ones, and vice versa, is provided, which also improves safety and reliability of the process of cooking and serving the dishes ordered.

The claimed method and system for photorecording orders in catering facilities expand the range of devices intended for monitoring standard work procedures, customer service and other operations of catering facilities.

## Claims

1. A method for photorecording orders at catering facilities, comprising steps wherein:
an order is received,
the order is entered into a data base,
dishes included into the order are cooked,
as the dishes in the order are ready they are placed into a photorecording means, and their images are obtained,
the images obtained are entered in the data base for the order,
a respective dish is removed from the photorecording means and is served to the customer,
a register receipt is printed, which includes the images of the dishes ordered, by means for printing a register receipt on the basis of the order data entered in the data base.

2. The method of Claim 1, wherein, at the step of photorecording a dish in an order, one or more parameters of the dish are additionally measured, such parameters include a weight of the dish; a time when the dish is placed into the photorecording means; a time period for which the dish is held in the photorecording means; a dish temperature; a temperature map of a surface of the dish; and wherein, at the step of entering an image into the data base, the measured parameters of the dish are entered into the data base with reference to its image.

3. The method of Claim 2, wherein a printed register receipt includes, in addition to an image of a dish, one or more parameters of the dish, such parameters include a weight of the dish; a time when the dish is placed into the photorecording means; a time period for which the dish is held in the photorecording means; a temperature of the dish; a temperature map of a surface of the dish.

4. A system for photorecording orders at catering facilities, comprising an electronic data processing device with the following devices connected thereto:
a terminal for receiving and processing orders,
a data base for storing information on orders, dishes and their images,
a photorecording means equipped with a photo/video camera for photorecording dishes ordered,
a means for printing a register receipt including images of the dishes ordered, and
interfaces between the system components.

5. The system of Claim 4 with the photorecording means additionally configured for measuring one or more parameters of a dish, such parameters comprising: a weight of the dish; a time when the dish is put into the photorecording means; a time period for which the dish is held in the photorecording means; a temperature of the dish; a temperature map of a surface of the dish.

6. The system of Claim 4, wherein the means for printing register receipts is additionally configured for printing one or more parameters of a dish, such parameters include a weight of the dish; a time when the dish is put into the photorecording means; a time period for which the dish is held in the photorecording means; a temperature of the dish; a temperature map of a surface of the dish.
